# EUROPEAN PATENT SPECIFICATION

(11) **EP 2 452 801 B1**
(45) Date of publication and mention of the grant of the patent: **06.09.2017**
(21) Application number: 11189171.9
(22) Date of filing: 15.11.2011
(51) Int. Cl.: B29C 47/06, B29C 35/02, F16L 9/12, C08J 3/24

(54) **Production method of plastic pipe in layers**
Verfahren zur Herstellung von Kunststoffrohren in Schichten
Procédé de production de tuyaux en plastique en couches

(30) Priority: 16.11.2010 FI 20100374
(43) Date of publication of application: 16.05.2012
(73) Proprietor: Heino, Aarne, 33540 Tampere (FI)
(72) Inventor: Heino, Aarne, 33540 Tampere (FI)
(74) Representative: Berggren Oy, Tampere

(56) References cited:
- EP-A1- 0 678 069
- WO-A1-99/57474
- WO-A2-2007/139977
- DE-A1- 3 903 436
- JP-A- 2005 280 225
- US-A- 5 089 352
- US-A- 6 106 761
- US-A1- 2004 020 547
- BORCHARDT H ET AL: "EXTRUSION VON ROHREN AUS VERNETZTEM POLYETHYLEN (PE-X)", KUNSTOFFE INTERNATIONAL, CARL HANSER VERLAG, MUNCHEN, DE, vol. 89, no. 12, 1 December 1999 (1999-12-01), pages 74-76, XP000949627, ISSN: 0023-5563

## Description

The object of the invention as denoted in claim 1 is a method to produce plastic pipe in layers where one of the layers is made of ethyl vinyl alcohol that decreases or prevents the penetration of the oxygen or other gas. It is characteristic for the invention how the mentioned layer can be fixed favorably to other layer or layers without an adhesion layer.

It is generally known to use a cross-linked polyethylene pipe to lead hot and cold water. By using cross-linking in a polyethylene pipe it is obtained a heat tolerance especially in long lasting usage and in usage under pressure.

It is also generally known that the weakness of a cross-linked polyethylene pipe is its penetration of oxygen that causes especially in circulating water systems the increase of the oxygen content and as a result of that the metal parts of the system become oxidized.

Furthermore it is known that oxygen penetration of cross-linked polyethylene pipe is reduced by adding to the pipe a small layer of such polymer the oxygen penetration of which is as small as possible. One polymer of this kind is ethyl vinyl alcohol, EVOH.

Because the adhesive ability of the ethyl vinyl alcohol to the polyethylene is very slight it is necessary to put a layer of adhesion plastic between the layers of the cross-linked polyethylene and the ethyl vinyl alcohol because it sticks well to both of the materials.

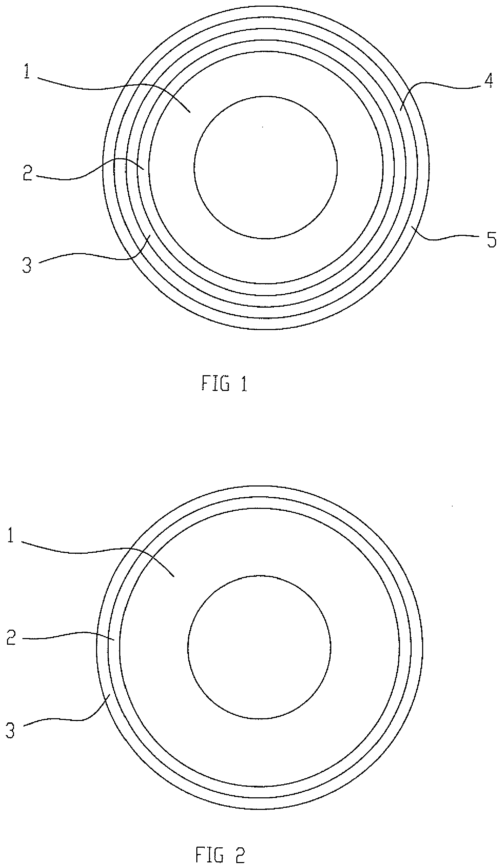

Furthermore as we know that the ethyl vinyl alcohol is a water-soluble polymer it is usually not wanted to leave it to be the outermost layer of a pipe in layers but to its surface, a protective layer is installed that can be for instance polyethylene or cross-linked polyethylene. Also this layer must be fixed to the ethyl vinyl alcohol layer using adhesion polymer. Thus we get the construction of fig. 1, where the layer 1 is of cross-linked polyethylene, the layer 2 is of adhesion polymer, layer 3 is ethyl vinyl alcohol, layer 4 is adhesion polymer and layer 5 is either polyethylene or cross-linked polyethylene.

If we think for example that it is a question about a typical size pipe, outside diameter is 16 mm and wall thickness is 2 mm and the thickness of every additional layer is 0.1 mm, the cross-linked part thickness in the wall is only 1.6 or 1.7 mm depending on whether the outmost layer 5 is of polyethylene or cross-linked polyethylene. This means that as only the cross-linked layer is taken into account in the calculations of the heat and pressure resistances the pipe does not fill minimum requirements of the norms.

The general use of additional barrier or protection layers in cross-linkable polymeric materials has been reported in US patents Nos. 5,089,352 and 6,106,761. Moreover, pipes comprising layers of EVOH which are bound to layers of cross-linked polyethylene by additional adhesive layers have been reported in Japanese patent application No. 2005 280225, in US patent application No. 2004/020547, and by Borchardt and Kreth (Kunststoffe International, vol. 89, no. 12, December 1999, pages 74-76). In WO 99/57474 a barrier layer of liquid crystal polymer is reported. WO 2007/139977 reports a flexible tubing having a cross-linked polyethylene inner core surrounded by a reinforcing structure, such as a braid. WO 94/21441 discloses a technique for extrusion of plastic.

With the method of the object of the invention it is possible to produce a plastic pipe where less additional layers are needed to obtain the same capabilities as the pipe in fig 1 with five layers.

Polyethylene can be cross-linked mainly by three methods: by exposing to radiation, with the help of silanes or by using additives that produce free radicals when they decompose by the effect of the heat and these free radicals in turn are capable of releasing atoms from the molecular chains and thus the free reactive molecular chain parts join to each other by chemical bonds. For instance some organic peroxides belong to the group of these additives. In the method according to this invention the last one of the mentioned has been used because that is the only of the methods where the extrusion and cross-linking of the plastic pipe take place in the same line. If it is wanted to produce a pipe according to prior-art technique using peroxide cross-linking where there are above mentioned additional layers the additional layers are extruded to the surface of the pipe that already has been cross-linked in a separate extrusion unit that, however, is usually in the same line with the extrusion and cross-linking of the actual pipe.

Fig 2 shows an example of a pipe that has been produced using the method according to the invention where layer 1 is of cross-linked polyethylene, layer 2 is of ethyl vinyl alcohol and layer 3 is of cross-linked polyethylene.

In the case of this example, a plastic pipe is made in one press head nozzle of the extruder and this pipe has three layers. The innermost layer is of polyethylene and the before mentioned additives, that form free radicals when decomposing, have been mixed to it, like organic peroxide. The middle layer is of ethyl vinyl alcohol and the outmost layer in turn is of the same material as the innermost layer.

Immediately after the extruder nozzle the pipe goes through either a hot salt bath or an oven with infrared radiation. In this phase, the pipe construction temperature is raised to the level that the before mentioned additive decomposes causing two things. Firstly, the innermost and outmost layers get cross-linked, and secondly, the free radicals caused by the decomposing of the additives release also atoms in the layer surfaces from ethyl vinyl alcohol molecules and thus chemical bonds are formed between the ethyl vinyl alcohol layer and the cross-linked polyethylene layer and they bind the layers to each other without any separate adhesion polymer.

This way, the layer structure of fig 2 is obtained, where there is 1.9 mm cross-linked polyethylene of the wall of 2 mm in comparison with construction of fig 1 that means a more favorable situation than in fig 1 as to pressure and heat tolerance.

## Claims

1. Production method for a plastic pipe consisting of at least two layers wherein:
a. the plastic pipe is produced by an extruder,
b. at least the innermost layer (1) is cross-linked,
c. during said cross-linking step at least one additive is used that produces free radicals when it decomposes by the effect of heat thus forming chemical bonds between the layers,
d. the heat treatment needed for the cross-linking is done by infrared radiation obtained by infrared lamps or salt bath or by some other convenient method,
e. an ethyl vinyl alcohol layer (2) is installed to the plastic pipe to hinder or prevent the oxygen to go through the wall of the pipe,
**characterized in that**
f. all the layers of the plastic pipe are made at the same time in one press head nozzle of the extruder,
g. alongside the innermost layer (1), the ethyl vinyl alcohol layer (2) is formed in said press head nozzle,
h. during said heat treatment step,the innermost layer (1) is cross-linked, and the free radicals caused by decomposition of the additives also release atoms from ethyl vinyl alcohol molecules in the layer's surface, such that chemical bonds are formed between the innermost cross-linked layer (1) and the ethyl vinyl alcohol layer (2) that bind the layers to each other without any separate adhesive polymer, i. the complete cross-linking is achieved through one heat treatment step.

2. Production method according to claim 1 **characterized in that** a three layer plastic pipe is produced whereby:
a. the innermost layer (1) or the innermost and outmost layers (3) are cross-linked,
b. the third layer (2) the material of which is ethyl vinyl alcohol that decreases or prevents the oxygen flow is placed between the innermost (1) and the outmost (3) layers.

3. The multilayered plastic pipe consisting of three layers (1), (2), (3) obtainable by the method of claim 2 **characterized in that:** chemical bonds are formed between the innermost layer (1) and the third layer of EVOH (2) and/or the outermost layer (3) and the third layer of EVOH (2).

## Patentansprüche

1. Herstellungsverfahren für ein Kunststoffrohr, das aus mindestens zwei Schichten besteht, wobei:
a. das Kunststoffrohr mittels eines Extruders hergestellt wird,
b. mindestens die innerste Schicht (1) vernetzt ist,
c. während des Vernetzungsschrittes mindestens ein Zusatzstoff verwendet wird, der freie Radikale erzeugt, wenn er durch Wärmeeinwirkung zersetzt wird, wodurch chemische Verbindungen zwischen den Schichten gebildet werden,
d. die für die Vernetzung benötigte Wärmebehandlung mittels Infrarotstrahlung, welche durch Infrarotlampen erhalten wird, oder durch ein Salzbad oder ein anderes geeignetes Verfahren erfolgt.
e. eine Ethylvinylalkoholschicht (2) am Kunststoffrohr angebracht wird, um zu verhindern bzw. zu unterbinden, dass Sauerstoff durch die Wand des Rohres gelangt,
**dadurch gekennzeichnet, dass**
f. alle Schichten des Kunststoffrohrs zur gleichen Zeit in einer Presskopfdüse des Extruders hergestellt werden,
g. entlang der innersten Schicht (1) die Ethylvinylalkoholschicht (2) in der Presskopfdüse gebildet wird,
h. während des Wärmebehandlungsschrittes die innerste Schicht (1) vernetzt wird und die durch die Zersetzung der Zusatzstoffe entstehenden freien Radikale auch Atome aus Ethylvinylalkoholmolekülen in der Oberfläche der Schicht freigegeben, so dass chemische Verbindungen zwischen der innersten vernetzten Schicht (1) und der Ethylvinylalkoholschicht (2) gebildet werden, die die Schichten ohne einen separaten Polymerklebestoff miteinander verbinden,
i. die gesamte Vernetzung durch einen einzelnen Wärmebehandlungsschritt erzielt wird.

2. Herstellungsverfahren gemäß Anspruch 1, **dadurch gekennzeichnet, dass** ein dreischichtiges Kunststoffrohr hergestellt wird, wobei:
a. die innerste Schicht (1) oder die innerste und äußerste Schicht (3) vernetzt werden,
b. die dritte Schicht (2), deren Material Ethylvinylalkohol ist, der den Sauerstofffluss verringert oder verhindert, zwischen der innersten (1) und der äußersten (3) Schicht platziert wird.

3. Das mehrschichtige Kunststoffrohr, das aus drei Schichten (1), (2), (3) besteht, die durch das Verfahren von Anspruch 2 erhalten werden können, **dadurch gekennzeichnet, dass:**
chemische Verbindungen zwischen der innersten Schicht (1) und der dritten Schicht aus EVOH (2) und/oder der äußersten Schicht (3) und der dritten Schicht aus EVOH (2) gebildet werden.

## Revendications

1. Procédé de production d'un tuyau en plastique constitué d'au moins deux couches, dans lequel :
a. le tuyau en plastique est produit grâce à une extrudeuse,
b. au moins la couche la plus intérieure (1) est réticulée,
c. pendant ladite étape de réticulation, au moins un additif est utilisé, qui produit des radicaux libres lorsqu'il se décompose sous l'effet la chaleur, formant ainsi des liaisons chimiques entre les couches,
d. le traitement thermique nécessaire pour la réticulation est mis en oeuvre grâce à un rayonnement infrarouge obtenu au moyen de lampes infrarouges, ou grâce à un bain de sel, ou grâce à un quelconque autre procédé approprié,
e. une couche de copolymère éthylène-alcool vinylique (2) est mise en place sur le tuyau en plastique afin d'entraver ou d'empêcher le passage de l'oxygène à travers la paroi dudit tuyau,
**caractérisé en ce que**
f. toutes les couches du tuyau en plastique sont réalisées en même temps dans une buse de compression de l'extrudeuse,
g. la couche de copolymère éthylène-alcool vinylique (2) est formée dans ladite buse à côté de la couche la plus intérieure (1),
h. pendant ladite étape de traitement thermique, la couche la plus intérieure (1) est réticulée, et les radicaux libres provoqués par la décomposition des additifs libère également des atomes en provenance des molécules de copolymère éthylène-alcool vinylique présents dans la surface de couche, de telle manière que des liaisons chimiques sont formées entre la couche réticulée la plus intérieure (1) et la couche de copolymère éthylène-alcool vinylique (2), qui lient les couches l'une à l'autre sans un quelconque autre polymère adhésif,
i. la totalité de l'étape de réticulation est mise en oeuvre en une seule étape de traitement thermique.

2. Procédé de production selon la revendication 1, **caractérisé en ce qu'**un tuyau en plastique à trois couches est produit, dans lequel :
a. la couche la plus intérieure (1) ou les couches la plus intérieure et la plus extérieure (3) sont réticulées,
b. la troisième couche (2) dont le matériau est le copolymère éthylène-alcool vinylique qui réduit ou empêche la circulation d'oxygène est placée entre les couches la plus intérieure (1) et la plus extérieure (3).

3. Tuyau en plastique multicouches constitué de trois couches (1), (2), (3) pouvant être obtenu grâce au procédé selon la revendication 2,
**caractérisé en ce que** :
des liaisons chimiques sont formées entre la couche la plus intérieure (1) et la troisième couche de EVOH (2) et/ou la couche la plus extérieure (3) et la troisième couche de EVOH (2).
